# EUROPÄISCHE PATENTSCHRIFT

(11) **EP 4 139 586 B1**
(45) Veröffentlichungstag und Bekanntmachung des Hinweises auf die Patenterteilung: **01.11.2023**
(21) Anmeldenummer: 21729867.8
(22) Anmeldetag: 28.05.2021
(51) Int. Cl.: F16G 13/16

(54) **LEITUNGSFÜHRUNGSEINRICHTUNG, INSBESONDERE ENERGIEFÜHRUNGSKETTE, UND KETTENGLIED MIT DÄMPFUNGSELEMENTEN**
CABLE-GUIDING APPARATUS, IN PARTICULAR AN ENERGY CHAIN, AND CHAIN LINK WITH DAMPING ELEMENTS
DISPOSITIF DE GUIDAGE DE LIGNES, EN PARTICULIER CHAÎNE PORTE-CÂBLES, ET MAILLON DE CHAÎNE POURVU D'ÉLÉMENTS D'AMORTISSEMENT

(30) Priorität: 27.05.2020 DE 202020103050 U
(43) Veröffentlichungstag der Anmeldung: 01.03.2023
(73) Patentinhaber: Igus GmbH, 51147 Köln (DE)
(72) Erfinder: JAEKER, Thilo-Alexander, 53757 Sankt Augustin (DE); BARTEN, Dominik, 53340 Meckenheim (DE)
(74) Vertreter: Lippert Stachow Patentanwälte Rechtsanwälte
(86) Internationale Anmeldenummer: PCT/EP2021/064463
(87) Internationale Veröffentlichungsnummer: WO 2021/240007

(56) Entgegenhaltungen:
- EP-A1- 3 199 833
- DE-A1- 10 053 262
- DE-U1-202004 005 801
- DE-U1-202005 005 763
- DE-U1-202006 019 646

## Beschreibung

Die Erfindung betrifft allgemein eine Leitungsführungseinrichtung, insbesondere Energieführungskette, zur dynamischen Führung von Leitungen, wie z.B. Schläuchen, Kabel oder dergleichen, zwischen zwei relativ zueinander beweglichen Anschlussstellen unter Ausbildung zweier Trume, die jeweils mit einer der Anschlussstellen verbunden sind und über einen Umlenkbereich ineinander übergehen.

Eine gattungsgemäße Leitungsführungseinrichtung umfasst eine Vielzahl in Längsrichtung und schwenkbar miteinander verbundener Glieder bzw. Segmente, die jeweils zwei laschenartige Seitenteile aufweisen. Seitenteile sind in Längsrichtung gelenkig miteinander verbunden und bilden zwei Laschenstränge. Zumindest einige der Glieder umfassen zumindest einen, vorzugsweise jeweils zwei die Seitenteile bzw. die Laschenstränge in Querrichtung miteinander verbindende Querstege. Die Querstege begrenzen zusammen mit den Seitenteilen einen meist kastenförmigen Aufnahmeraum für zu führende Leitungen, den Innenraum, quer zur Längsrichtung. Bei einigen Bauarten weist jedes Glied Querstege auf. Es gibt auch Varianten, bspw. bei einer sogenannten halbstegigen Bauweise, in welchen z.B. nur jedes zweite Glied Querstege aufweist.

Ferner ist bei einer gattungsgemäßen Leitungsführungseinrichtung mindestens einer der Querstege, hier als der erste Quersteg bezeichnet, als sogenannter Öffnungssteg, d.h. von zumindest einem der Seitenteile lösbar ausgeführt. Ein solcher Öffnungssteg kann aufschwenkbar sein, um Zugang zu dem Innenraum zu ermöglichen, und/oder kann insbesondere als separates Bauteil vorliegen, das lösbar mit dem Glied verbunden ist und wieder abgenommen werden kann.

In der Regel ist eine der Anschlussstellen stationär, bspw. an einer Ablagefläche, angeordnet, wobei die andere Anschlussstelle in einer von der Ablagefläche beabstandeten, insbesondere parallelen, Bewegungsebene beweglich ist.

Bei einer in einer vertikalen Ebene fahrbaren Anordnung ist der Trum, der mit der beweglichen Anschlussstelle verbunden ist, typisch oben angeordnet und wird Obertrum genannt, und der mit der stationären Anschlussstelle verbundene Trum ist dementsprechend das Untertrum. Die Ablagefläche und die Bewegungsebene der Trume können vertikal, horizontal oder schräg voneinander beabstandet sein.

Als Umlenkbereich wird der Übergang von dem einen Trum in das andere Trum bezeichnet, in dem die Leitungsführungseinrichtung in eine andere Richtung, üblicherweise in die entgegengesetzte Richtung, umgelenkt wird. Der bewegliche Trum, insbesondere der Obertrum, wird durch die bewegliche Anschlussstelle gezogen oder geschoben. Beim Verfahren der Leitungsführungseinrichtung in Schubrichtung, gehen die Glieder aus dem Obertrum über den Umlenkbereich in den Untertrum über und werden dabei auf die Ablagefläche abgelegt. Dabei schwenken die Glieder aus dem Umlenkbereich in die Strecklage des Untertertrums und treffen radial auf die Ablagefläche, typisch mit den Schmalseiten der Seitenteile, die im Umlenkbereich radial außen angeordnet waren. Dies führt typisch zu Vibration und Geräuschentwicklung, die je nach Geschwindigkeit und Gewicht bzw. Größe der Energieführungskette beträchtlich sein können. Besonders bei Energieführungsketten mit großer Kettenteilung ist dieses Problem bekannt und durch den sog. Polygoneffekt verstärkt.

Zur Geräuschdämpfung und Vibrationsdämpfung ist daher schon vorgeschlagen worden, die im Umlenkbereich radial außen liegenden Schmalseiten der Seitenteile oder die Außenseiten der Querstege mit Dämpfungselementen zu versehen. Solche Dämpfungselemente können an ausgewählten Gliedern, bspw. an jedem zweiten, oder an jedem Glied vorgesehen sein.

DE 20 2005 005 763 U1 der Anmelderin beschreibt beispielsweise eine Leitungsführungseinrichtung der eingangs genannten Art, wobei zumindest in einem Längsabschnitt der Leitungsführungseinrichtung elastisch federnde Dämpfungselemente vorgesehen sind, die sich zumindest an der im Umlenkbereich außen liegenden Seite der Leitungsführungseinrichtung befinden. Die Dämpfungselemente nach DE 20 2005 005 763 U1 sind an separaten Anbauteilen vorgesehen, welche zudem einen Verbindungsbereich zur Befestigung des Dämpfungselements an einem Quersteg oder an einer Schmalseite eines Seitenteils aufweisen. Der Verbindungsbereich kann z.B. als Klammer zum Einrasten am Quersteg ausgeführt sein. Ein Dämpfungselement kann auch in einer Ausnehmung im Quersteg oder in der Schmalseite eines Seitenteils einrasten. In jedem Fall sind zusätzliche Komponenten bzw. Bauteile notwendig, um die Dämpfungselemente nach DE 20 2005 005 763 U1 zu verwirklichen.

Auch DE 20 2006 019 646 U1 beschreibt Dämpfungselemente, die als separate Bauteile an die Querstege angebracht werden.

DE 10 2012 106 400 A1 bzw. US 8,459,000 B2 offenbaren elastische hohlzylindrische Dämpfungselemente zum Aufstülpen auf biegeaußenseitige Querstege einer Energieführungskette. Die Querstege werden dabei durch die Dämpfungselemente umschlossen. Zum Herstellen der Dämpfungselemente nach DE 10 2012 106 400 A1 wird eine erhebliche Materialmenge benötigt. Die Montage ist zwar einfach, erfordert aber dennoch einen zusätzlichen Montageschritt. Außerdem wird ein Teil des Aufnahmeraums der Energieführungskette durch die Dämpfungselemente beansprucht.

Nachteilig bei diesen Lösungen sind u.a. der zusätzliche Montageaufwand und einhergehende Fehlerrisiken, z.B. das Fehlen oder Fehlplatzieren eines Dämpfers. Hinzu kommt das Risiko eines ungewollten Abtrennens bzw. Lösens eines Dämpfungselements im Betrieb. Beides kann zu asymmetrischem Lauf und einhergehender ungleichmäßiger Belastung, d.h. frühzeitigem Versagen führen.

Eine Aufgabe der Erfindung ist es mithin, eine Leitungsführungseinrichtung mit Geräuschdämpfung vorzuschlagen, welche eine vereinfachte und weitgehend fehlerfreie Montage ermöglicht. Die Lösung soll sich zudem durch eine möglichst robuste Bauweise auszeichnen.

Bei einer Leitungsführungseinrichtung nach dem Oberbegriff des Anspruchs 1 wird die Aufgabe erfindungsgemäß bereits dadurch gelöst, dass bei ausgewählten Gliedern jeweils zwei elastisch federnde Dämpfungselemente einstückig bzw. einteilig mit dem lösbaren ersten Quersteg gebildet bzw. hergestellt sind, wobei jedes Dämpfungselement in einem von zwei Endbereichen des Querstegs vorgesehen ist.

Die Erfindung betrifft zudem ein Kettenglied mit elastisch federnden Dämpfungselementen, insbesondere für eine Energieführungskette nach Anspruch 1, wobei das Kettenglied zwei Seitenteile umfasst, welche jeweils zur gelenkigen Verbindung mit benachbarten Kettengliedern ausgeführt sind, und einen ersten Quersteg und einen zweiten Quersteg umfassen. Die Querstege verbinden die Seitenteile miteinander, insbesondere zu einem kastenförmigen Querschnitt mit einem Aufnahmeraum für die Leitungen. Mindestens einer der Querstege, hier als erster Quersteg bezeichnet, ist dabei lösbar mit den Seitenteilen verbunden und weist zwei Endbereiche auf. Erfindungsgemäß weist dieser erste Quersteg zwei elastisch federnde Dämpfungselemente auf. Jedes Dämpfungselement ist einstückig bzw. einteilig (Engl. "made in one piece") mit jeweils einem der Endbereiche des Querstegs ausgeführt bzw. gebildet, insbesondere geformt.

Der zerstörungsfrei lösbare erste Quersteg selbst ist dabei in geeigneter Weise mit den Seitenteilen befestigt, insbesondere bestimmungsgemäß dauerfest, und typisch winkelstabil, d.h. so dass sich der erste Quersteg bei bestimmungsgemäßen Beanspruchungen im laufenden Betrieb nicht löst. Somit sind die Dämpfungselemente bei einer bestimmungsgemäßen Beanspruchung gleichsam mit dem ersten Quersteg unverlierbar mit dem Kettenglied bzw. mit einem Glied der Leitungsführungseinrichtung verbunden.

Die einstückige Bauweise des Querstegs ist besonders robust und zuverlässig und erlaubt zudem eine schnelle Montage der Kettenglieder bzw. der Leitungsführungseinrichtung, in welcher keine gesonderte Montage von Dämpfungselementen nötig ist. Mit dem notwendigen Schritt zur Montage des lösbaren Querstegs werden dann aber im selben Arbeitsschritt zugleich zwei Dämpfungselemente montiert. Durch die vorgegebene Lage und Anzahl der Dämpfungselemente können zudem keine Montagefehler auftreten.

Der Begriff Endbereich eines Querstegs bezieht sich hier allgemein auf die Längserstreckung des Querstegs, die bei einem in ein Kettenglied eingebauten Quersteg quer, insbesondere senkrecht, zur Längsrichtung der Leitungsführungseinrichtung bzw. in Querrichtung des Kettenglieds verläuft. Einstückig bedeutet vorliegend einteilig, jedoch nicht unbedingt materialeinheitlich. Der Quersteg kann materialeinheitlich hergestellt sein, oder aber aus mehreren unterschiedlichen Materialien, z.B. durch ein Zweikomponenten-Spritzgussverfahren, hergestellt sein.

Die Dämpfungselemente können aus einem Elastomer, vorzugsweise aus einem thermisch aushärtenden Elastomer hergestellt sein. Prinzipiell können auch thermoplastische Elastomere zur Herstellung der Dämpfungselemente verwendet werden.

Bei einer der obengenannten Vorrichtungen, d.h. bei einer Leitungsführungseinrichtung oder bei einem Kettenglied, hat jedes Seitenteil einen plattenartigen Körper mit zwei Hauptseiten bzw. Breitseiten - einer inneren Breitseite und einer der inneren Breitseite gegenüberliegenden äußeren Breitseite - und zwei im Wesentlichen in Längsrichtung verlaufende Schmalseiten. Die innere Breitseite ist dem Aufnahmeraum der Leitungsführungseinrichtung bzw. des Kettenglieds zugewandt. Wenn das Seitenteil sich im Umlenkbereich befindet, liegt eine der Schmalseiten, die innere Schmalseite, zur Umlenkachse zugewandt. Die andere, d.h. die äußere Schmalseite, kann den Außenradius des Umlenkbereichs bilden und liegt an der von der Umlenkachse radial abgewandten Seite der Vorrichtung. Die äußere Schmalseite kommt bei gattungsgemäßen Vorrichtungen in Kontakt mit der Ablagefläche, auf welcher typisch der Untertrum abgestützt ist.

Die elastisch federnden Dämpfungselemente, d.h. der erste hiermit einteilig ausgerüstete Quersteg wird zumindest in einem Abschnitt der Länge der Leitungsführungseinrichtung vorgesehen, und insbesondere an der im Umlenkbereich außen liegenden Seite von ausgewählten Kettengliedern. Die elastisch federnden Dämpfungselemente können insbesondere zur Dämpfung durch eine bestimmungsgemäß primäre Biegebeanspruchung, z.B. in Art einer Biegefeder, ausgeführt sein.

Die beiden elastisch federnden Dämpfungselemente am Quersteg haben bevorzugt zueinander identische Gestaltung für eine beidseitig symmetrische Dämpfungswirkung.

Die Dämpfungselemente sind dabei bevorzugt im Bereich der beiden äußeren Schmalseiten der jeweiligen Kettenglieder am lösbaren Quersteg vorgesehen. Im Prinzip wäre es zwar möglich, Dämpfungselemente einteilig mit den äußeren Schmalseiten der Seitenteile vorzusehen. Seitenteile sind jedoch typisch aus biegesteifen Materialien mit einem hohen Elastizitätsmodul hergestellt. Das Material der Seitenteile soll eine besonders hohe Formstabilität (gegen Zug-, Torsions- und/oder Druckkräfte) und hohe Biegesteifigkeit der Seitenteile und somit auch der Kettenglieder und der Leitungsführung insgesamt gewährleisten. Ein auf eine hohe Anzahl von Biegewechseln ausgelegtes Dämpfungselement sollte hingegen aus weniger steifem, eher dauerelastischen Material hergestellt sein.

Es wäre denkbar an die Seitenlaschen im Zweikomponenten-Spritzgussverfahren Dämpfungselemente an das Seitenteil anzuformen. Dies würde aber die Herstellung der Seitenteile deutlich verteuern. Da Dämpfungselemente nicht an jedem Kettenglied notwendig sein müssen, wären zudem jeweils für alle Radien beide Arten von Seitenteilen, d.h. mit und ohne Dämpfungselementen, herzustellen und vorrätig zu halten. Querstege dagegen sind üblicherweise in verschiedenen Formen, u.a. unterschiedlicher Länge, bereits vorgesehen und werden je nach benötigtem Innenraumvolumen mit den Seitenteilen anwendungsspezifisch kombiniert. Die Erfindung bietet daher - insbesondere im Vergleich zu Seitenlaschen mit Dämpfungselementen - herstellungstechnische Vorteile durch die Integration der Dämpfungselemente in die Querstege. Zudem ist anders als bei den Seitenteilen bzw. Seitenlaschen eine Herstellung aus dauerbiegeelastischem Material, auch materialeinheitlich, mit Querstegen leichter realisierbar.

Allgemein sind die Seitenteile und die Querstege, insbesondere der erste Quersteg mit Dämpfungselementen, bevorzugt aus Kunststoff hergestellt, insbesondere aus verschiedenartigen Kunststoffen, vorzugsweise als Spritzgussteile d.h. im Spritzgussverfahren.

In einer Ausführungsform gemäß Anspruch 1, werden die lösbaren Querstege mit einteilig daran vorgesehenen Dämpfungselementen in Klemmaufnahmen der Seitenteile befestigt. Dabei haben die Seitenteile zumindest an einer Schmalseite, insbesondere der äußeren Schmalseite, eine in der Schmalseite vertiefte Klemmaufnahme mit in Längsrichtung gegenüberliegenden Klemmflächen auf, zur lösbaren Verbindung mit dem ersten Quersteg. Zumindest ein Endbereich, vorzugsweise jeder Endbereich des ersten Querstegs, umfasst dabei ein Verbindungselement zum kraftschlüssigen Einsetzen in die entsprechende Klemmaufnahme.

Der jeweilige Endbereich des Querstegs kann dabei vorteilhaft verformbar, z.B. aus elastischem Material, hergestellt sein, insbesondere aus einem Material, das weicher, insbesondere weichelastischer, im Vergleich zum Material der Seitenteile ist. Das Material des jeweiligen Endbereichs kann vorzugsweise ein Elastomer umfassen, bspw. ein spritzgussfähiges und thermisch aushärtendes Elastomer. Ein elastisches Material in den Endbereichen ist von doppeltem Vorteil: einerseits zum Einklemmen des Verbindungselements in der Klemmaufnahme unter verringertem Kraftaufwand und anderseits für eine elastisch biegsame Ausgestaltung des Dämpfungselements einteilig und ggf. materialeinheitlich mit dem gesamten Endbereich.

Der Endbereich kann ggf. materialeinheitlich mit einem Teil oder dem gesamten Hauptkörper des Querstegs sein, oder z.B. im Zweikomponenten-Spritzgussverfahren an den Hauptkörper des Querstegs angeformt sein, falls zwei unterschiedlich steife Materialien gewünscht sind. Der Quersteg kann jedoch auch insgesamt aus einem für die Dämpfungselemente ausreichend verformbaren weicheren bzw. elastischeren Kunststoff bestehen, insbesondere im Vergleich zu den Seitenlaschen, vorzugsweise aus einem spritzgussfähigen Elastomer.

Bevorzugt ist der lösbare erste Quersteg als separates Bauteil ausgeführt.

Als Klemmaufnahme kann insbesondere eine Randausnehmung im Seitenteil vorgesehen sein, welche in der Schmalseite des Seitenteils zurückspringt und/oder über die gesamte Breite des Seitenteils durchgeht und auch beidseitig an den Breitseiten mündet bzw. offen ist. Die Klemmflächen halten dabei das eingesetzte, komplementär geformte Verbindungselement und damit den Quersteg stabil fest. Dies erlaubt eine feste Verbindung durch Formschluss und zusätzlichen Kraftschluss bzw. Reibschluss in Art einer Klemm- bzw. Pressverbindung. Dadurch kann insbesondere eine bestimmungsgemäß feste, insbesondere winkelstabile bzw. unbewegliche, Befestigung erreicht werden, welche sich im Betrieb nicht ungewollt löst, auch bei weicherem Material der Verbindungselemente bzw. Endbereiche und ggf. des gesamten Querstegs.

Zum Zusammenwirken mit einer Klemmaufnahme kann jedes der beiden Verbindungselemente eines Querstegs zwei in Richtung senkrecht zur Längsachse des Querstegs weisende voneinander abgewandte Gegenklemmflächen aufweisen, die zum Zusammenwirken mit den komplementären Klemmflächen der Klemmaufnahme eines Seitenteils dienen. Durch Gestaltung und Materialwahl kann der Bereich des Verbindungselements zwischen den Gegenklemmflächen kompressibel ausgeführt sein, um einen Kraftschluss zu verstärken.

Auch andere lösbare Befestigungen des ersten Querstegs mit Dämpfungselementen liegen jedoch im Rahmen der Erfindung, z.B. konventionelle Schnappverbindungen mit einem Vorsprung an den Schmalseiten der Seitenteile, oder schwenkbare Verbindungen für aufschwenkbare Öffnungsstege.

Der Quersteg sollte vorzugsweise von Hand und idealerweise werkzeugfrei, montierbar und ggf. nur bei ausreichend hohem Kraftaufwand und mit Werkzeug demontierbar sein, z.B. durch Aushebeln mittels eines Flachschraubenziehers.

Beim Verfahren der Leitungsführungseinrichtung erfolgt ein Verschwenken des jeweiligen Kettenglieds aus dem Umlenkbereich in den Untertrum. Dabei treffen üblicherweise die äußeren Schmalseiten auf die Ablagefläche des Untertrums und liegen hierauf abgestützt. Die Querstege sollten bei konventionellen Lösungen typisch nicht aufliegen.

Erfindungsgemäße Querstege sollen jedoch mit den Dämpfungselementen auf die Ablagefläche auftreffen, zumindest bevor die entsprechenden Schmalseiten des jeweiligen Kettenglieds auftreffen bzw. aufliegen. Dementsprechend stehen die Dämpfungselemente in Höhenrichtung sowohl über die Schmalseiten und über den Rest des ersten Querstegs nach außen hervor, insbesondere an der im Umlenkbereich außen liegenden Seite.

Gemäß Anspruch 1 sind die Dämpfungselemente jeweils im Bereich der Verbindungselemente der Querstegs vorgesehen, welche mit den Seitenteilen verbunden werden. Dabei kann das jeweilige Dämpfungselement mit dem entsprechenden Verbindungselement quer zur Längsrichtung des Querstegs (d.h. in Längsrichtung der Leitungsführung) etwa fluchtend ausgeführt sein bzw. eine entsprechende Lage und Abmessung aufweisen.

Jedes Dämpfungselement ist in Querrichtung bzw. Breitenrichtung vorzugweise so dimensioniert , dass es die Breite der Seitenteile bzw. die Schmalseite des jeweiligen Seitenteils zumindest teilweise oder vollständig überdeckt. Somit können die Dämpfungselemente auf die Ablagefläche des Untertrums aufschlagen und Kraft unmittelbar auf die Seitenteile übertragen, im Unterschied zu Bauweisen aus dem Stand der Technik, bei denen die Dämpfungselemente näher zur Querstegmitte angeordnet sind. Das erlaubt eine besonders gute Krafteinleitung in die Laschenstränge ohne Verformung im mittleren Bereich der Querstege. In einer diesbezüglich bevorzugten Ausführungsform liegen die Dämpfungselemente jeweils in Querrichtung bzw. in Richtung der Breite der Schmalseite fluchtend mit der entsprechenden Schmalseite.

Jedes Dämpfungselement weist vorzugsweise eine zugeordnete Materialaussparung zwischen Dämpfungselement und Körper des Querstegs, insbesondere zwischen Dämpfungselement und Verbindungselement auf.

In Verbindung mit Klemmaufnahmen zur Befestigung kann die Materialaussparung beim geschlossenen Quersteg zumindest geringfügig in die Klemmaufnahme hineinragen. Dies unterstütz den Presssitz bzw. Kraftschluss in der Klemmaufnahme einerseits und erlaubt zudem ggf. eine Vorspannung der elastischen Federfunktion des Dämpfungselements durch die Klemmaufnahme.

Das Dämpfungselement kann bevorzugt nach Art einer Bogenfeder, insbesondere in Form einer Bogenbrücke ausgeführt werden. Beim Aufschlagen des Glieds auf die Ablagefläche kann sich zumindest der mittlere Bereich der Bogenfeder elastisch verformen und ggf. in die zugeordnete Materialaussparung ausweichen. Im unbelasteten Zustand kann das Dämpfungselement seine ursprüngliche Bogenform annehmen.

Die Materialaussparung weist insbesondere einen langlochförmigen oder länglich ovalen Querschnitt auf, dessen Längsachse vorzugsweise in Längsrichtung des Kettenglieds bzw. der Leitungsführungseinrichtung verläuft. Diese Ausführungsform erlaubt eine mechanisch günstige Krafteinleitung, z.B. in Längsrichtung gegen Klemmflächen der zugehörigen Klemmaufnahme falls vorhanden.

Der lösbare erste Quersteg kann einen langgestreckten plattenförmigen Hauptkörper umfassen und in jedem Endbereich jeweils ein einteilig mit dem Hauptkörper geformtes Verbindungselement, insbesondere zum Verbinden mit einer Klemmaufnahme eines Seitenteils bilden. Das Verbindungselement weist vorzugsweise eine gegenüber dem Hauptkörper verringerte Querschnittsfläche quer zur Längserstreckung des Querstegs auf.

Die jeweilige Klemmaufnahme bildet vorzugsweise mit dem Verbindungselement eine Querverriegelung in Querrichtung senkrecht zur Längsrichtung des Kettenglieds bzw. der Leitungsführungseinrichtung. In einer bevorzugten Ausführungsform mit Klemmaufnahme ist zur Sicherung des separaten Querstegs gegen Verschiebung senkrecht zur Hauptebene des Seitenteils vorgesehen, dass jede Klemmaufnahme einen länglichen und in Längsrichtung erstreckten Querverriegelungsvorsprung aufweist, um durch Eingriff in eine komplementäre längliche Querverriegelungsnut im Verbindungselement den Quersteg in Richtung von dessen Längsachse zu halten. Gleichwertig hierzu ist eine umgekehrte Ausführungsform, bei welcher jede Klemmaufnahme eine längliche und in Längsrichtung erstreckte Querverriegelungsnut aufweist, um durch Eingriff eines komplementären länglichen Querverriegelungsvorsprungs am Verbindungselement eines Querstegs diesen gegen Verschiebung senkrecht zur Hauptebene des Seitenteils zu halten.

Jedes Dämpfungselement ist vorzugsweise in Art einer Bogenfeder mit zwei Bogenenden ausgeführt. Die Bogenenden können jeweils einstückig mit dem jeweiligen Endbereich des Querstegs ausgebildet sein, wobei die Bogenfeder vorzugsweise in Längsrichtung verlaufend angeordnet ist. In anderen Worten, die Bogenenden sind vorzugsweise in Längsrichtung voneinander beabstandet.

Alternativ oder ergänzend, kann der Hauptkörper des Querstegs angrenzend an das jeweilige Verbindungselement quer zur Längserstreckung des Querstegs vorspringende Schultern aufweisen, mit denen der Quersteg an den Innenwänden bzw. den Innenseiten der Seitenteile, die er verbindet, in Querrichtung abgestützt anliegen kann, was eine stabilere Verbindung und stabilere Kastenform des Glieds bzw. Segments der Leitungsführungseinrichtung mit sich bringt.

Die Dämpfungselemente können als Blattfeder bzw. Federzunge, die nur einseitig einstückig mit dem entsprechenden Endbereich des Querstegs ausgebildet ist, ausgeführt sein. Die Blattfeder bzw. die Federzunge kann sich in Längsrichtung oder auch senkrecht zur Längsrichtung erstrecken. Die Federzunge kann bspw. mit einem Endbereich des Querstegs einstückig ausgeführt sein und mit ihrem freien Ende in Richtung des anderen Endbereichs ausgerichtet sein.

Bevorzugt wird jedoch eine Ausführungsform mit einer Bogenfeder, insbesondere einer an beiden Enden mit dem Quersteg einstückigen Bogenfeder. Wenn eine Klemmaufnahme vorgesehen ist können die Bogenenden in Längsrichtung vorzugsweise über die Einmündung der Klemmaufnahme hervorstehen bzw. diese überdecken. Dies erlaubt eine zusätzliche Abstützung des Dämpfungselements an der Oberseite bzw. an den die Klemmaufnahme umgebenden Bereichen bzw. Kanten der Schmalseite des Seitenteils.

Die Dämpfungselemente umfassen vorzugsweise jeweils einen elastisch verformbaren Bereich, insbesondere einen nach außen vorstehenden, bogenförmigen Bereich in Art einer Blattfeder. Dessen Wandstärke bzw. Materialdicke in Richtung senkrecht zur Längsrichtung und senkrecht zur Querrichtung kann im Vergleich zur mittleren Wandstärke bzw. Materialdicke des Querstegs reduziert sein, z.B. <75% oder <50% der mittleren Wandstärke des Querstegs betragen. Die Wandstärke kann insbesondere im mittleren Bereich der Bogenfeder bzw. der Bogenbrücke reduziert sein. Bevorzugt wird jedoch, wenn die Bogenfeder eine im Wesentlichen konstante Wandstärke von einem Bogenende zum anderen aufweist.

In einer bevorzugten Ausführungsform können zumindest die Endbereiche des lösbaren Querstegs oder der gesamte Quersteg materialeinheitlich mit den Dämpfungselementen hergestellt sein, insbesondere im Spritzgussverfahren.

Die Dämpfungselemente können jedoch auch an die Endbereiche des Querstegs angeformt sein, insbesondere im Zweikomponenten-Spritzgussverfahren.

Zumindest die Endbereiche der lösbaren ersten Querstege können aus einem weicheren, insbesondere dauerelastischen, Kunststoff hergestellt sein als der Kunststoff, aus dem die Seitenteile hergestellt sind. Der Kunststoff der Seitenteile weist typisch hohe Steifigkeit, Härte, und hohes Elastizitätsmodul, wie z.B. faserverstärktes PA oder dgl., auf. Das Material der Seitenteile kann eine besonders hohe Formstabilität (gegen Zug-, Torsions- und/oder Druckkräfte) und hohe Biegesteifigkeit der Seitenteile und auch der Glieder insgesamt gewährleisten.

In einer Ausführungsform ist der gesamte Quersteg samt der Endbereiche und der Dämpfungselemente elastisch verformbar und insbesondere aus einem weichelastischen Kunststoff hergestellt, welcher weicher als der Kunststoff der Seitenteile ist.

Jedes Kettenglied kann einen ersten und einen zweiten Quersteg umfassen, die jeweils von zumindest einem Seitenteil, vorzugsweise von beiden Seitenteilen, zerstörungsfrei lösbar sind. Dabei können beide Querstege baugleich sein, um die Anzahl von Gleichteilen zu erhöhen. Somit können beide Querstege sogenannte Öffnungsstege sein und beide jeweils zwei Dämpfungselemente aufweisen, auch wenn die Dämpfungsfunktion nur an einer Seite genutzt wird, z.B. bei mit freitragendem Obertrum. Es ist auch möglich, dass der zweite lösbare Quersteg ohne Dämpfungselemente ausgeführt ist.

Jedes Kettenglied kann aber auch einen einteilig mit den Seitenteilen hergestellten zweiten Quersteg aufweisen, sodass nur der erste Quersteg ein Öffnungssteg ist. Der zweite Quersteg kann insbesondere keine Dämpfungselemente aufweisen. Ein Vorteil solcher Kettenglieder liegt darin, dass sie besonders robust sind.

Die lösbaren ersten Querstege mit Dämpfungselementen sind vorzugsweise an der im Umlenkbereich außen liegenden Seite der Leitungsführungseinrichtung bzw. des Kettenglieds vorgesehen. Dies erleichtert nebst der primären Dämpfungswirkung auch den Zugang zu den geführten Leitungen für Inspektions- und Reparaturzwecke.

Die Glieder der Leitungsführungseinrichtung können beispielsweise durch Gelenkverbindungen aus Gelenkzapfen und korrespondierender Gelenkaufnahme miteinander verbunden sein. Bevorzugt wird jedoch eine Verbindung der Glieder mit Gelenkelementen, welche in der Abwinkelungsrichtung der Glieder elastisch deformierbar sind, und sich zumindest teilweise zwischen der inneren und äußeren Breitseite der Seitenteile erstrecken. Beispielsweise beschreibt EP 1 381 792 B1 der Anmelderin derartige biegeelastische Gelenkelemente, die als Federelemente ausgeführt sind und bei einer Abwinkelung der Glieder aus einer Strecklage elastische Rückstellkräfte auf die benachbarten Glieder ausüben. Hierdurch wird eine zusätzliche Geräuschdämpfung bei der Fahrbewegung der Leitungsführungseinrichtung erzielt. Das Gelenkelement ist vorzugsweise als separates, bspw. plattenartiges, Bauteil aus einem Material mit hoher Dauerbiegefestigkeit, Kerbzähigkeit und/oder geeigneter Elastizität hergestellt. Die elastischen Eigenschaften des Gelenkelements sind vorzugsweise so eingestellt, dass das Gelenkelement bei jeder bestimmungsgemäßen Biegebeanspruchung im elastischen Bereich bleibt und bei einer Deformation elastische Rückstellkräfte auf die durch das Gelenkelement verbundenen Seitenteile ausübt. Die Gelenkelemente sind vorzugsweise als separate Bauteile ausgeführt und in Ausnehmungen der Seitenteile, insbesondere im Presssitz, angeordnet.

Solche bekannten bereits geräusch- und vibrationsreduzierenden Leitungsführungseinrichtungen können besonders vorteilhaft mit erfindungsgemäßen Dämpfungselementen an lösbaren Querstegen kombiniert werden. Ein Vorteil derartiger Leitungsführungseinrichtungen ist die relativ kurze Kettenteilung, d.h. der Abstand zwischen den gedachten Achsen von zwei aufeinanderfolgenden Gelenkbereichen, welche den sog.

Polygoneffekt minimiert und in Verbindung mit Dämpfungselementen besonders geräusch- und vibrationsarm verfahrbare Leitungsführungseinrichtung ermöglicht. Solche Leitungsführungseinrichtungen eignen sich insbesondere auch für Anwendungen in denen Abrieb bzw. die Partikelfreigabe minimiert werden soll, z.B. in Reinraumanwendungen.

Gemäß einem weiteren, vom vorstehenden unabhängigen Aspekt wird demnach als eigenständige Erfindung eine derartige Leitungsführungsvorrichtung vorgeschlagen, bei welcher die Kettenglieder schwenkbar miteinander verbunden sind und die schwenkbare Verbindung Gelenkelemente aufweist, die elastisch deformierbar sind und jeweils mindestens zwei in Längsrichtung aufeinander folgende Seitenteile gelenkig miteinander verbinden. Ein Kerngedanke, insbesondere dieses weiteren Erfindungsaspekts besteht dabei darin, dass zumindest an der Außenseite ein lösbarer Quersteg vorgesehen ist, welcher mindestens ein integriertes Dämpfungselement aufweist, vorzugsweise zwei elastisch federnde Dämpfungselemente, die einstückig mit dem Quersteg ausgebildet bzw. hergestellt sind.

Die Erfindung betrifft ferner einen Quersteg für eine Leitungsführungseinrichtung bzw. ein Kettenglied nach einer der vorstehenden Ausführungsformen, wobei der Quersteg zwei elastisch federnde Dämpfungselemente aufweist. Jedes Dämpfungselement ist dabei einstückig mit jeweils einem der Endbereiche des Querstegs geformt.

Der Quersteg kann vorteilhaft eines oder mehrere der weiterbildenden Merkmale wie vorstehend beschrieben aufweisen.

Weitere Merkmale und Vorteile der Erfindung sind ohne Beschränkung des Schutzumfangs der nachfolgenden Beschreibung einiger bevorzugter Ausführungsbeispiele anhand der beiliegenden Figuren zu entnehmen. Hierbei zeigen:
- **FIG.1:**: einen Teilabschnitt einer Energieführungskette gemäß Stand der Technik in Perspektivansicht;
- **FIG.2:**: ein erfindungsgemäßes Kettenglied mit Dämpfungsfunktion in Frontansicht;
- **FIG.3:**: das Kettenglied nach FIG.2 in Draufsicht;
- **FIG.4:**: einen Ausschnitt einer Seitenansicht des Kettenglieds nach FIG.2;
- **FIG.5A:**: einen Ausschnitt eines Querschnitts nach B-B;
- **FIG.5B:**: einen Ausschnitt eines Querschnitts nach D-D; und
- **FIG.6:**: einen Abschnitt einer Energieführungskette nach einem weiteren erfindungsgemäßen Ausführungsbeispiel in Seitenansicht.

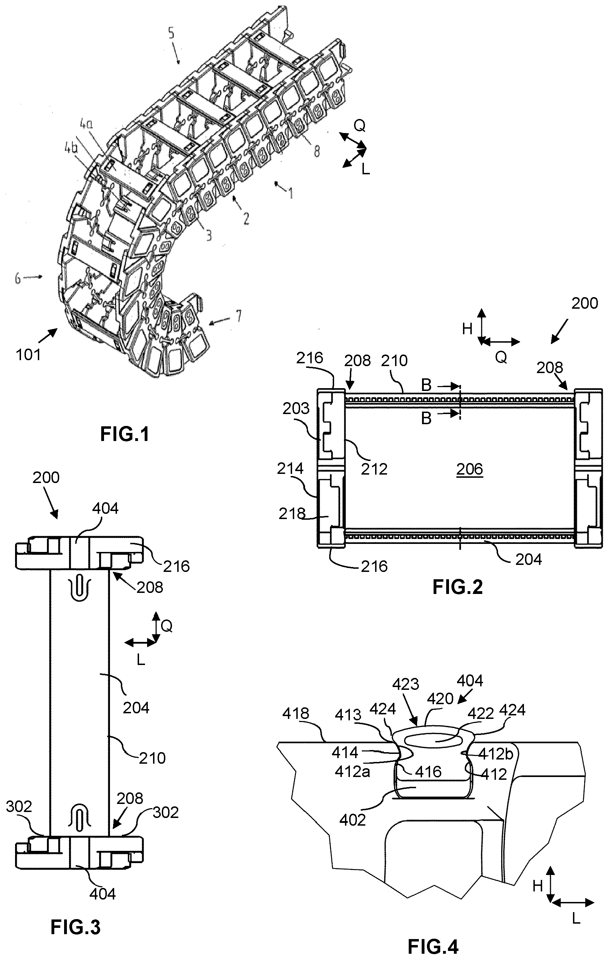

FIG.1 zeigt eine Energieführungskette 1 nach dem Prinzip aus EP 1 381 792 B1 der Anmelderin (entspricht FIG.1 dort). Die Energieführungskette 1 umfasst eine Vielzahl in Längsrichtung gelenkig miteinander verbundener Seitenteile 3, die jeweils zwei parallel zueinander angeordnete Stränge bilden, welche durch obere und untere Querstege 4a,4b miteinander verbunden sind. Die Energieführungskette 1 kann bogenförmig unter Bildung eines Untertrums 7 eines Umlenkbereichs 6 und eines Obertrum 5 verfahren werden. Die Energieführungskette 1 weist eine im Umlenkbereich außen liegende Seite 101 und eine im Umlenkbereich innen liegende Seite 102 auf.

Die Seitenteile 3 sind durch Gelenkelemente 8 miteinander verbunden, welche hier die Gelenkverbindung ausbilden. In diesem Fall sind jeweils genau zwei einander benachbarte Seitenteile 3 gelenkig miteinander verbunden. Die Gelenkelemente 8 sind als separate, im Wesentlichen plattenartige Bauteile ausgeführt, die in seitlich offenen Ausnehmungen der Seitenteile 3 angeordnet sind und sich über die gesamte Breite der Seitenteile 3 in Querrichtung Q senkrecht zur Längsrichtung L erstrecken. Das Gelenkelement 8 ist in Abwinkelungsrichtung der Energieführungskette 1 elastisch deformierbar und in Art eines Federelements ausgeführt, das in Art einer Blattfeder wirkt. Das Gelenkelement 8 übt nach Abbiegung aus dessen langgestreckter Ruhestellung elastische Rückstellkräfte auf die benachbarten Seitenteile 3 aus.

Das Gelenkelement 8 ist auf halber Höhe der Seitenteile 3 angeordnet und definiert die neutrale Faser der Energieführungskette 1. Die Seitenteile 3 und die Gelenkelemente 8 sind aus unterschiedlichen Kunststoffmaterialien mit unterschiedlichen Elastizitätsmodulen hergestellt.

Die erfindungsgemäße Gestaltung wird besonders bevorzugt aber nicht zwingend kombiniert mit einer Energieführungskette 1 nach dem Prinzip aus FIG.1, d.h. bei welcher die schwenkbare Verbindung der Glieder Gelenkelemente aufweist, die elastisch deformierbar sind.

FIG.2 zeigt ein Ausführungsbeispiel eines erfindungsgemäßen Kettenglieds 200 umfassend zwei in Querrichtung Q voneinander beabstandete Seitenteile 203 und zwei diese verbindende Querstege 204. Die Seitenteile 203 und die Querstege 204 grenzen einen Aufnahmeraum 206 des Kettenglieds 200 quer zur Längsrichtung L ab, in den Leitungen aufgenommen werden können. Die Seitenteile 203 sind plattenartig ausgeführt und weisen jeweils eine innere 212 und eine äußere Breitseite 214, zwei Schmalseiten 216 und zwei Stirnseiten 218 auf. Die Schmalseiten 216 verlaufen in Längsrichtung L und haben eine Breite in Querrichtung Q senkrecht zur Längsrichtung L. Die beiden Querstege 204, der obere und der untere Quersteg, verbinden jeweils die oberen bzw. die unteren Schmalseiten 216 der Seitenteile 203 und sind in diesem Beispiel als baugleiche Öffnungsstege ausgeführt.

Die Querstege 204 weisen jeweils zwei in Querrichtung Q voneinander beabstandete Endbereiche 208 auf und können an jedem der Endbereiche 208 vom entsprechenden Seitenteil 203 zerstörungsfrei gelöst werden, um Zugang zu dem Aufnahmeraum 206 zu erlauben. Die Querstege 204sind, wie die Seitenteile 203 hier als separate Bauteile in Spritzgusstechnik hergestellt.

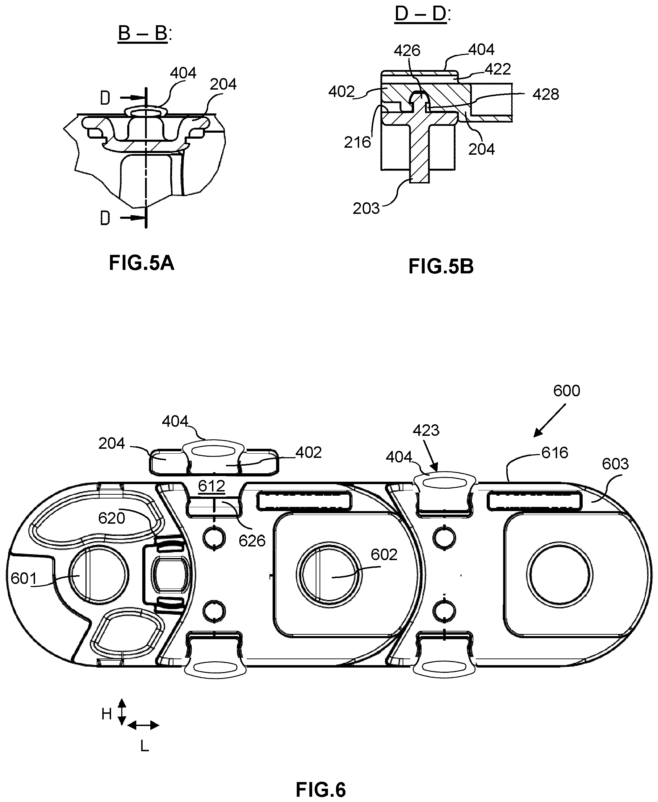

Die Kettenglieder 200 nach FIG.2-5 sind bevorzugt durch Gelenkelemente 8, wie im Stand der Technik gemäß FIG.1, miteinander verkettet. Die schwenkbare Verbindung kann auch durch eine typische Bolzen/Aufnahme-Verbindung gemäß FIG.6 oder auf eine andere Weise erfolgen.

FIG.3 zeigt das Kettenglied 200 von oben bzw. unten, wobei die Hauptebene des Querstegs 204 in der Ebene der FIG.3 liegt. Der Quersteg 204 ist einstückig und plattenartig mit einem langgestreckten plattenförmigen Hauptkörper 210 ausgeführt. Der jeweilige Endbereich 208 ist mit der Schmalseite 216 des jeweiligen Seitenteils 203 durch ein Verbindungselement 402 verbunden, welches integraler Bestandteil des Endbereichs 208 und des Querstegs 204 ist. Bei einem geschlossenen Kettenglied 200 - siehe FIG.2 bis FIG.6 - ist das Verbindungselement 402 in einer Klemmaufnahme 412 in dem Seitenteil 203 aufgenommen und eingeklemmt. Jeder Endbereich 208 umfasst hierzu ein Verbindungselement 402 aus einem weichelastischen Material, der in der Klemmaufnahme 412 kraftschlüssig eingesetzt ist.

Der Quersteg 204 kann hierzu materialeinheitlich aus einem im Vergleich zu den Seitenteilen 203 weniger steifen bzw. harten Kunststoff hergestellt sein. Der Quersteg 204 kann auch durch ein Zweikomponenten-Spritzgussverfahren hergestellt sein, z.B. mit einem Hauptkörper aus demselben biegesteifen Kunststoff, bspw. faserverstärkten Polyamid, wie die Seitenteile 203.

Der Hauptkörper 210 hat eine größere Breite bzw. die Erstreckung in Richtung senkrecht zur Längserstreckung der Querstegs 204 als die Verbindungselemente 402 an den Endbereichen 208, sodass der Quersteg 204 jeweils zwei Schultern 302 am Übergang vom Hauptkörper 210 zum jeweiligen Verbindungselement 402 aufweist. Jede Schulter 302 bilden eine Stützfläche, mit der der Hauptkörper 210 des Querstegs 204 stirnseitig an der jeweiligen inneren Breitseite 212 der Seitenteile 203 anliegt, zur zusätzlichen Versteifung des Kettenglieds 200.

FIG.4 zeigt eine bevorzugte Art der Verbindung des Querstegs 204 mit einem Seitenteil 203 durch Klemmwirkung anhand von Klemmaufnahmen 412. Die Klemmaufnahme 412 ist als Vertiefung bzw. Aussparung in der Schmalseite 310 ausgeführt, die, von der Einmündung 413 in Richtung der Aufnahmetiefe, eine Ausbuchtung bzw. Hinterschneidung 416 aufweist. Die Klemmflächen 412a, 412b verlaufen senkrecht zur Hauptebene des Seitenteils 203 und begrenzen die Klemmaufnahme in Längsrichtung L. Das Verbindungselement 402 ist quasi im Presssitz, in die Klemmaufnahme 412 eingedrückt, und so zuverlässig mit dem Seitenteil 203 verbunden, sodass der Quersteg 204 beim Verfahren der Energieführungskette 1 nicht ungewollt abgetrennt werden kann.

Wie FIG.4 am besten veranschaulicht hat der Quersteg 204 in seinen zwei gegenüberliegenden Endbereichen 208 jeweils ein einstückig mit dem Quersteg 204 ausgebildetes elastisch federndes Dämpfungselement 404. Das Material des Dämpfungselements 404 weist, im Vergleich zum Material des mittleren Bereichs des Querstegs 204 bzw. der Seitenteile 203, ein niedrigeres Elastizitätsmodul und ausgeprägtere weichelastische Eigenschaften auf. Da dies auch für die Zusammenwirkung des Verbindungselements 402 mit der Klemmaufnahme 412 vorteilhaft ist, kann jedes Dämpfungselement 404 insbesondere materialeinheitlich mit dem Verbindungselement 402 ausgeführt sein.

Bei dem in FIG.4 gezeigten Ausführungsbeispiel ist das Dämpfungselement 404 als Bogenfeder 423 in Form einer Bogenbrücke ausgeführt, mit zwei in Längsrichtung L voreinander beabstandeten Bogenenden 424, die mit dem Verbindungselement 402 jeweils einstückig und unlösbar bzw. fest verbunden sind. Die Bogenbrücke 423 überspannt das Verbindungselement 402 in Längsrichtung L. Zwischen dem Dämpfungselement 404 und dem Verbindungselement 402 ist eine ovale Materialaussparung 422 vorgesehen, deren Längsachse beim geschlossenen Quersteg 204 in Längsrichtung L verläuft und ca. auf der Höhe der Oberseite der Schmalseite 216 liegt. Die Materialaussparung 422 reicht somit mit einem unteren Bereich zum Teil in die Klemmaufnahme 412. Bei montiertem Quersteg 204 befinden sich die Bogenenden 424 in Längsrichtung L beidseitig der Klemmaufnahme 412 und überdecken in der Draufsicht den Rand der Klemmaufnahme 412 in Längsrichtung L.

Die Bogenbrücke 423 bzw. das Dämpfungselement 404 steht dabei über der Oberfläche 418 der Schmalseite 216 des Seitenteils 203 in Höhenrichtung H vor. Wenn der Quersteg 204 sich an der außen liegenden Seite 101 der Energieführungskette 1 im Umlenkbereich 6 befindet und die Energieführungskette 1 in Schubrichtung verfährt, d.h. wenn der ruhende Untertrum 7 länger und der bewegte Obertrum 5 kürzer wird, wird das Kettenglied 200 auf der Ablagefläche so abgelegt, dass die Dämpfungselemente 404 des Querstegs 204 jedenfalls vor den Schmalseiten 216 der Seitenteile 203 auf die Ablagefläche auftreffen bzw. in Anlage kommen. Der mittlere Bereich 420 der Bogenfeder 423 wird dabei verformt, z.B. in die Materialaussparung 422 teilweise eingedrückt. Durch die Federwirkung des Dämpfungselements 404 bzw. der Bogenfeder 423 werden dabei Geräuschentwicklung und auch Vibrationen reduziert.

Als vorteilhafter Nebeneffekt in Kombination mit Klemmaufnahmen 412 kann dabei das Verbindungselement 402 mit seiner Gegenklemmfläche 414 Kraft auf die Klemmfläche 412a bzw. 412b ableiten, d.h. die Flächenpressung wird insgesamt auf größere Flächen verteilt und z.T. in Längsrichtung umgelenkt. Dank der Form der Klemmaufnahme 412 mit Hinterschneidung 416 verbleibt das Verbindungselement 402 dennoch sicher in der Klemmaufnahme 412 gehalten oder kann sogar - sollte eine unerwünschte Verschiebung eingetreten sein - selbsttätig durch die Dämpfungselemente 404 wieder in die gehaltene Stellung eindrückt werden.

Ein weiterer Vorteil der Kombination mit Klemmaufnahmen 412 besteht darin, dass die Bogenfeder 423 durch die Klemmkraft der Klemmaufnahme 412 jeweils leicht vorgespannt werden kann und somit bei geringerem Materialaufwand eine bessere Dämpfung erzielbar ist.

FIG.5A zeigt die Schnittlinien D-D des Querschnitts in FIG.5B. FIG.5B veranschaulicht, dass das Dämpfungselement 404 in Höhenrichtung H, d.h. senkrecht zur Längsrichtung L und senkrecht zur Querrichtung Q, oberhalb des Endbereichs, hier des Verbindungselements 402 liegt, z.B. mit einem Höhenabstand von ca. 10-40% der Höhe des Hauptkörpers des Querstegs 204. FIG.5B zeigt weiterhin, dass das Dämpfungselement 404 in Querrichtung Q im Wesentlichen bündig mit den Breitseiten 212, 214 des Seitenteils 203 dimensioniert ist, d.h. etwa dieselbe Breitenabmessung hat.

FIG.5B zeigt weiterhin, eine Maßnahme zur Sicherung des Querstegs 204 gegen Verschiebung in Querrichtung Q, d.h. senkrecht zur Hauptebene des Seitenteils 203. Hierzu weist die Klemmaufnahme 412 einen länglichen und in Längsrichtung L erstreckten Querverriegelungsvorsprung 426 auf. Das Verbindungselement 402 des Querstegs 204 weist eine komplementäre längliche Querverriegelungsnut 428 auf. Durch Eingriff des Querverriegelungsvorsprungs 426 in die Querverriegelungsnut 428 wird der Quersteg 204 in Richtung der Querrichtung Q bzw. gegen Verschiebung in der ansonsten zylindrischen Klemmaufnahme 412 entlang seiner Längsachse gehalten.

FIG.6 zeigt einen Abschnitt einer alternativen Bauweise einer Energieführungskette, hier zwei Kettenglieder 600, gemäß einem weiteren Ausführungsbeispiel.

Im Beispiel aus FIG.6 sind die Seitenteile 603, wie bei einer konventionellen Gliederkette, d.h. durch zusammenwirkende Gelenkbolzen 601 und Gelenkaufnahmen 602, in welcher je ein Gelenkbolzen 601 drehbar aufgenommen ist, in Längsrichtung L miteinander verbunden und relativ zueinander schwenkbar. In einem bezüglich der Längsrichtung L mittleren Bereich des jeweiligen Seitenteils 603 ist an der Schmalseite 616 eine Klemmaufnahme 612 vorgesehen. In der leeren Klemmaufnahme 612 links in der FIG.6 ist der Querverriegelungsvorsprung 626 sichtbar. Auch in diesem Ausführungsbeispiel sind Querstege 204 mit Dämpfungselementen 404 vorgesehen, insbesondere an der äußeren Schmalseite oder an beiden Seiten der Kettenglieder 600 (wie gezeigt).

Die Querstege 204 mit den Dämpfungselementen 404, sowie die Klemmaufnahmen 612 in FIG.6 sind analog bzw. nach gleichem Prinzip wie die entsprechenden Bauteile in FIG.2-5B ausgeführt.

Die Seitenteile in FIG.6 können als zusätzliche Geräuschdämpfung dämpfende Anschläge 620, wie in DE 20 2018 102 144 U1 der Anmelderin offenbart, aufweisen (nicht gezeigt), deren Lehre insoweit hier einbezogen ist.

### Bezugszeichenliste

- 1: Energieführungskette
- 2: Kettenglied
- 3: Seitenteil
- 4a, 4b: Quersteg
- 5: Obertrum
- 6: Umlenkbogen
- 7: Untertrum
- 8: Gelenkelement
- 101: außen liegende Seite der Energieführungskette
- 200: Kettenglied
- 203: Seitenteil
- 204: Quersteg
- 206: Aufnahmeraum des Kettenglieds
- 208: Endbereich des Querstegs
- 210: Hauptkörper des Querstegs
- 212: innere Breitseite des Seitenteils
- 214: äußere Breitseite des Seitenteils
- 216: Schmalseite des Seitenteils
- 218: Stirnseite des Seitenteils
- 302: Schulter des Querstegs
- 402: Verbindungselement
- 404: Dämpfungselement
- 412: Klemmaufnahme
- 412a, 412b: Klemmflächen
- 413: Einmündung der Klemmaufnahme
- 414: Gegenklemmflächen
- 416: Hinterschneidung
- 418: Oberfläche der Schmalseite eines Seitenteils
- 420: mittlerer Bereich der Bogenfeder
- 422: Materialaussparung
- 424: Bogenenden
- 423: Bogenfeder/Bogenbrücke
- 426: Querverriegelungsvorsprung
- 428: Querverriegelungsnut
- 600: Kettenglied
- 601: Gelenkbolzen
- 602: Gelenkaufnahme
- 603: Seitenteil
- 616: Schmalseite des Seitenteils
- 626: Querverriegelungsvorsprung
- 620: dämpfende Anschläge
- L: Längsrichtung
- Q: Querrichtung
- H: Höhenrichtung

## Patentansprüche

1. Leitungsführungseinrichtung, insbesondere Energieführungskette (1), zur Führung von Leitungen zwischen zwei relativ zueinander beweglichen Anschlussstellen unter Ausbildung zweier Trume (5, 7), die jeweils mit einer der Anschlussstellen verbunden sind und über einen Umlenkbereich (6) ineinander übergehen, umfassend:
- eine Vielzahl in Längsrichtung (L) und schwenkbar miteinander verbundener Glieder (200), die jeweils zwei Seitenteile (203) aufweisen, wobei die Seitenteile (203) zwei im Wesentlichen in Längsrichtung (L) verlaufende Schmalseiten (216) aufweisen,
- wobei zumindest einige der Glieder (200) jeweils zwei die Seitenteile (203) miteinander verbindende Querstege (204) aufweisen, von denen mindestens ein erster Quersteg (204) lösbar ist; und
- wobei zumindest in einem Abschnitt der Leitungsführungseinrichtung, insbesondere zumindest an der im Umlenkbereich (6) außen liegenden Seite (101), elastisch federnde Dämpfungselemente (404) an ausgewählten Gliedern (200) mit lösbarem ersten Quersteg (204) vorgesehen sind;
**dadurch gekennzeichnet, dass**
bei den ausgewählten Gliedern (200) jeweils zwei elastisch federnde Dämpfungselemente (404) einstückig mit dem lösbaren ersten Quersteg (204) gebildet sind, wobei jedes Dämpfungselement (404) in einem von zwei Endbereichen (208) des Querstegs (204) vorgesehen ist; wobei zumindest eine Schmalseite (216) zur lösbaren Verbindung mit dem ersten Quersteg (204) eine in der Schmalseite (216) vertiefte Klemmaufnahme (412) mit in Längsrichtung (L) gegenüberliegenden Klemmflächen (412a, 412b) aufweist, wobei jeder Endbereich (208) des ersten Querstegs (204) ein Verbindungselement (402) zum kraftschlüssigen Einsetzen in die Klemmaufnahme (412) umfasst; und wobei die Dämpfungselemente (404) im Bereich der Verbindungselemente (402) vorgesehen sind und in Breitenrichtung (Q) quer zur Längsrichtung (L) die Breite der Seitenteile (203) zumindest teilweise oder vollständig überdecken.

2. Kettenglied (200) mit elastisch federnden Dämpfungselementen (404), insbesondere für eine Energieführungskette (1) nach Anspruch 1, das Kettenglied (200) umfassend zwei Seitenteile (203), welche jeweils zur gelenkigen Verbindung mit benachbarten Kettengliedern (200) ausgeführt sind, wobei die Seitenteile (203) zwei im Wesentlichen in Längsrichtung (L) verlaufende Schmalseiten (216) aufweisen,
und einen ersten Quersteg (204) und einen zweiten Quersteg (204), welche die Seitenteile (203) miteinander verbinden, insbesondere zu einem kastenförmigen Querschnitt mit einem Aufnahmeraum (206) für die Leitungen, wobei mindestens der erste Quersteg (204) lösbar mit den Seitenteilen (203) verbunden ist und zwei Endbereiche (208) aufweist;
**dadurch gekennzeichnet, dass**
der erste Quersteg (204) zwei elastisch federnde Dämpfungselemente (404) aufweist und jedes Dämpfungselement (404) einstückig mit jeweils einem der Endbereiche (208) des Querstegs (204) gebildet ist; wobei zumindest eine Schmalseite (216) zur lösbaren Verbindung mit dem ersten Quersteg (204) eine in der Schmalseite (216) vertiefte Klemmaufnahme (412) mit in Längsrichtung (L) gegenüberliegenden Klemmflächen (412a, 412b) aufweist, wobei jeder Endbereich (208) des ersten Querstegs (204) ein Verbindungselement (402) zum kraftschlüssigen Einsetzen in die Klemmaufnahme (412) umfasst; und wobei die Dämpfungselemente (404) im Bereich der Verbindungselemente (402) vorgesehen sind und in Breitenrichtung (Q) quer zur Längsrichtung (L) die Breite der Seitenteile (203) zumindest teilweise oder vollständig überdecken.

3. Vorrichtung nach Anspruch 1 oder 2, **dadurch gekennzeichnet, dass** jedes Dämpfungselement (404) eine zugeordnete Materialaussparung (422) zwischen Dämpfungselement (404) und Verbindungselement (402) aufweist, wobei die Materialaussparung (422) zumindest geringfügig in die Klemmaufnahme (412) hineinragt, wobei die Materialaussparung (422) vorzugsweise einen langlochförmigen oder länglich ovalen Querschnitt in Längsrichtung (L) aufweist.

4. Vorrichtung nach einem der Ansprüche 1 bis 3, **dadurch gekennzeichnet, dass** der lösbare erste Quersteg (204) einen langgestreckten plattenförmigen Hauptkörper (210) umfasst und in jedem Endbereich (208) jeweils ein einteilig mit dem Hauptkörper (210) geformtes Verbindungselement (402) bildet, das gegenüber dem Hauptkörper (210) verringerte Querschnittsfläche aufweist, wobei jede Klemmaufnahme (412) vorzugsweise mit dem Verbindungselement (402) eine Querverriegelung senkrecht zur Längsrichtung (L) bildet.

5. Vorrichtung nach einem der vorstehenden Ansprüche, **dadurch gekennzeichnet, dass** jedes Dämpfungselement (404) in Art einer Bogenfeder mit zwei Bogenenden (424) ausgeführt ist, welche einstückig mit dem jeweiligen Endbereich (208) des Querstegs (204) verbunden sind, wobei die Bogenfeder vorzugsweise in Längsrichtung (L) verlaufend angeordnet ist.

6. Vorrichtung nach Anspruch 5, **dadurch gekennzeichnet, dass** die Bogenenden (424) in Längsrichtung (L) über die Einmündung (413) der Klemmaufnahme (412) hervorstehen.

7. Vorrichtung nach einem der vorstehenden Ansprüche, **dadurch gekennzeichnet, dass** die Dämpfungselemente (404) einen elastisch verformbaren Bereich umfassen, dessen Wandstärke im Vergleich zur mittleren Wandstärke des Querstegs (204) reduziert ist.

8. Vorrichtung nach einem der vorstehenden Ansprüche, **dadurch gekennzeichnet, dass** zumindest die Endbereiche (208) des lösbaren Querstegs (204) und die Dämpfungselemente (404) materialeinheitlich hergestellt sind, insbesondere im Spritzgussverfahren.

9. Vorrichtung nach einem der vorstehenden Ansprüche, insbesondere nach Anspruch 8, **dadurch gekennzeichnet, dass** zumindest die Endbereiche (208) der lösbaren ersten Querstege (204) aus einem weicheren, insbesondere dauerelastischen, Kunststoff hergestellt sind als die Seitenteile (203).

10. Vorrichtung nach einem der vorstehenden Ansprüche, **dadurch gekennzeichnet, dass** jedes Kettenglied (200) einen ersten und einen zweiten lösbaren Quersteg (204) umfasst, wobei beide Querstege (204) baugleich sind oder der zweite lösbare Quersteg (204) keine Dämpfungselemente (404) aufweist oder jedes Kettenglied (200) einen einteilig mit den Seitenteilen (203) hergestellten zweiten Quersteg aufweist.

11. Vorrichtung nach einem der vorstehenden Ansprüche, **dadurch gekennzeichnet, dass** die lösbaren erste Querstege (204) an der im Umlenkbereich (6) außen liegenden Seite (101) vorgesehen sind.

12. Energieführungskette nach einem der vorstehenden Ansprüche 1 oder 3 bis 11, **dadurch gekennzeichnet, dass** die Kettenglieder schwenkbar miteinander verbunden und die Verbindung Gelenkelemente (8) aufweist, wobei die Gelenkelemente (8) elastisch deformierbar sind und jeweils mindestens zwei in Längsrichtung (L) aufeinander folgende Seitenteile (3) miteinander verbinden.

13. Quersteg (204) für eine Leitungsführungseinrichtung bzw. ein Kettenglied (200) nach einem der vorstehenden Ansprüche, **dadurch gekennzeichnet, dass** Quersteg (204) zwei elastisch federnde Dämpfungselemente (404) aufweist und dass jedes Dämpfungselement (404) einstückig mit jeweils einem der Endbereiche (208) des Querstegs (204) gebildet ist; wobei jeder Endbereich (208) ein Verbindungselement (402) zum kraftschlüssigen Einsetzen in eine Klemmaufnahme (412) umfasst, welche in einer Schmalseite (216) eines Seitenteils (203) eines Kettenglieds (200) zur lösbaren Verbindung mit dem Quersteg (204) vertieft ist, und wobei die Dämpfungselemente (404) im Bereich der Verbindungselemente (402) zum zumindest teilweisen oder vollständigen Überdecken der Breite des Seitenteils in Breitenrichtung (Q) quer zur Längsrichtung (L) vorgesehen sind.

14. Quersteg (204) nach Anspruch 13, **gekennzeichnet durch** die weiterbildenden Merkmale gemäß dem Kennzeichen nach einem der Ansprüche 1 bis 11.

## Claims

1. Cable guiding apparatus, in particular energy guiding chain (1), for guiding cables between two connection points movable relative to one another, forming two runs (5, 7), each of which is connected to one of the connection points and passes one into the other via a deflection region (6), comprising:
- a plurality of longitudinally (L) and pivotally interconnected links (200) each having two side parts (203), the side parts (203) having two narrow sides (216) extending substantially in the longitudinal direction (L),
- wherein at least some of the members (200) each have two transverse webs (204) interconnecting the side parts (203), at least a first transverse web (204) of which is detachable; and
- wherein at least in a section of the cable guiding apparatus, in particular at least on the side (101) lying on the outside in the deflection region (6), elastically resilient damping elements (404) are provided on selected links (200) with a detachable first transverse web (204);
**characterized in that** in the selected links (200), two elastically resilient damping elements (404) are formed in each case integrally with the detachable first transverse web (204), each damping element (404) being provided in one of two end regions (208) of the transverse web (204), wherein at least one narrow side (216) has, for releasable connection to the first transverse web (204), a clamping receptacle (412) which is recessed in the narrow side (216) and has clamping surfaces (412a, 412b) which are opposite in the longitudinal direction (L), wherein each end region (208) of the first transverse web (204) comprises a connecting element (402) for non-positive insertion into the clamping receptacle (412); and wherein the clamping elements (404) are provided in the region of the connecting elements (402) and at least partially or completely cover the width of the side parts (203) in the width direction (Q) transverse to the longitudinal direction (L) .

2. Chain link (200) with elastically resilient damping elements (404), in particular for an energy guiding chain (1) according to claim 1, the chain link (200) comprising two side parts (203), which are each designed for articulated connection to adjacent chain links (200), the side parts (203) having two narrow sides (216) running essentially in the longitudinal direction (L), and a first transverse web (204) and a second transverse web (204) which connect the side parts (203) to one another, in particular to form a box-shaped cross section with a receiving space (206) for the cables, at least the first transverse web (204) being detachably connected to the side parts (203) and having two end regions (208);
**characterized in that**
the first transverse web (204) comprises two elastically resilient damping elements (404), and each of the damping elements (404) is integrally formed with a respective one of the end portions (208) of the transverse web (204); wherein at least one narrow side (216) has a clamping receptacle (412) recessed in the narrow side (216) for releasable connection to the first transverse web (204) and having clamping surfaces (412a, 412b) opposite one another in the longitudinal direction (L), wherein each end portion (208) of the first transverse web (204) comprises a connecting element (402) for force-fit insertion into the clamping receptacle (412) and wherein the damping elements (404) are provided in the region of the connecting elements (402) and at least partially or completely cover the width of the side parts (203) in the width direction (Q) transverse to the longitudinal direction (L).

3. Apparatus according to claim 1 or 2, **characterized in that** each damping element (404) has an associated material recess (422) between the damping element (404) and the connecting element (402), the material recess (422) projecting at least slightly into the clamping receptacle (412), the material recess (422) preferably having an elongated hole-shaped or elongated oval cross section in the longitudinal direction (L).

4. Apparatus according to any one of claims 1 to 3, **characterized in that** the detachable first transverse web (204) comprises an elongated plate-shaped main body (210) and forms in each end portion (208) a respective connecting element (402) formed integrally with the main body (210) and having a reduced cross-sectional area relative to the main body (210), each clamping receptacle (412) preferably forming together with the connecting element (402) a transverse interlock perpendicular to the longitudinal direction (L).

5. Apparatus according to any one of the preceding claims, **characterized in that** each damping element (404) is made in the manner of an arcuate spring having two arcuate ends (424) integrally connected to the respective end portion (208) of the transverse web (204), the arcuate spring preferably being arranged extending in the longitudinal direction (L).

6. Apparatus according to claim 5, **characterized in that** the arcuate ends (424) protrude in longitudinal direction (L) beyond the mouth (413) of the clamping receptacle (412).

7. Apparatus according to any one of the preceding claims, **characterized in that** the damping elements (404) comprise an elastically deformable region, the wall thickness of which is reduced compared to the average wall thickness of the transverse web (204).

8. Apparatus according to any one of the preceding claims, **characterized in that** at least the end portions (208) of the detachable transverse web (204) and the damping elements (404) are produced from uniform material, in particular by injection molding.

9. Apparatus according to any one of the preceding claims, in particular according to claim 8, **characterized in that** at least the end portions (208) of the detachable first transverse webs (204) are made of a softer, in particular permanently elastic, plastic material than the side parts (203) .

10. Apparatus according to any one of the preceding claims, **characterized in that** each chain link (200) comprises a first and a second detachable transverse web (204), wherein both transverse webs (204) are identical in construction or the second detachable transverse web (204) has no damping elements (404) or each chain link (200) has a second transverse web manufactured in one piece with the side parts (203) .

11. Apparatus according to any one of the preceding claims, **characterized in that** the detachable first transverse webs (204) are provided on the side (101) lying on the outside in the deflection region (6).

12. Energy chain according to any one of the preceding claims 1 or 3 to 11, **characterized in that** the chain links are pivotably connected to one another and the connection has link elements (8), the link elements (8) being elastically deformable and in each case connecting at least two side parts (3) succeeding each other in the longitudinal direction (L) .

13. Transverse web (204) for a cable guiding apparatus or a chain link (200) according to any one of the preceding claims, **characterized in that** the transverse web (204) has two elastically resilient damping elements (404) and **in that** each damping element (404) is formed integrally with a respective one of the end portions (208) of the transverse web (204); each end portion (208) comprising a connecting element (402) for non-positive insertion into a clamping receptacle (412) which is formed in a narrow side (216) of a side part (203) of a chain link (200) for releasable connection to the transverse web (204), and wherein the damping elements (404) are provided in the region of the connecting elements (402) for at least partially or completely covering the width of the side part in the width direction (Q) transverse to the longitudinal direction (L).

14. Transverse web (204) according to claim 13, **characterized by** the further features according to the characterizing part of one of claims 1 to 11.

## Revendications

1. Dispositif de guidage de lignes, en particulier chaîne porte-câbles (1), pour le guidage de lignes entre deux points de raccordement mobiles l'un par rapport à l'autre, en formant deux brins (5, 7) qui sont reliés chacun à l'un des points de raccordement et qui se raccordent l'un dans l'autre via une zone de déviation (6), comprenant:
- une pluralité de maillons (200) reliés entre eux dans la direction longitudinale (L) et de manière à pouvoir pivoter, qui présentent chacun deux parties latérales (203), les parties latérales (203) présentant deux côtés étroits s'étendant sensiblement dans la direction longitudinale (L) (216),
- dans lequel au moins certains des maillons (200) comprennent chacun deux traverses (204) reliant les parties latérales (203), dont au moins une première traverse (204) est détachable; et
- dans lequel, au moins dans une section du dispositif de guidage de ligne, en particulier au moins sur le côté (101) situé à l'extérieur dans la zone de déviation (6), des éléments d'amortissement (404) à ressort élastique sont montés sur des maillons sélectionnés (405) avec une première traverse (204) amovible;
**caractérisé en ce que**
sur les maillons sélectionnés (200), deux éléments d'amortissement élastiques (404) sont respectivement formés d'une seule pièce avec la première traverse amovible (204), chaque élément d'amortissement (404) étant prévu dans l'une de deux zones d'extrémité (208) de la traverse (204); au moins un petit côté (216) présentant, pour la liaison amovible avec la première traverse (204), un logement de serrage (412) creusé dans le petit côté (216) avec des surfaces de serrage (412a, 412b) opposées dans la direction longitudinale (L), chaque zone d'extrémité (208) de la première traverse (204) comprenant un élément de liaison (402) destiné à être inséré par force dans le logement de serrage (412); et les éléments d'amortissement (404) étant prévus dans la zone des éléments de liaison (402) et recouvrant au moins partiellement ou complètement la largeur des parties latérales (203) dans le sens de la largeur (Q) transversalement à la direction longitudinale (L).

2. Maillon de chaîne (200) avec des éléments d'amortissement élastiques (404), en particulier pour une chaîne porte-câbles (1) selon la revendication 1, le maillon de chaîne (200) comprenant deux parties latérales (203) qui sont réalisées chacune pour la liaison articulée avec des maillons de chaîne (200) voisins, les parties latérales (203) présentant deux côtés étroits (216) s'étendant essentiellement dans la direction longitudinale (L), et une première traverse (204) et une deuxième traverse (204) qui relient les parties latérales (203) entre elles, en particulier pour former une section transversale en forme de caisson avec un espace de réception (206) pour les câbles, au moins la première traverse (204) étant reliée de manière amovible aux parties latérales (203) et présentant deux zones d'extrémité (208);
**caractérisé en ce que**
la première traverse (204) comporte deux éléments d'amortissement élastiques (404) et chaque élément d'amortissement (404) est solidaire de l'une des zones d'extrémité (208) de la traverse (204); au moins un petit côté (216) présentant, pour la liaison amovible avec la première traverse (204), un logement de serrage (412) enfoncé dans le petit côté (216) avec des surfaces de serrage (412a, 412b) opposées dans la direction longitudinale (L), chaque zone d'extrémité (208) de la première traverse (204) comprenant un élément de liaison (402) pour l'insertion par force dans le logement de serrage (412); et dans lequel les éléments d'amortissement (404) sont prévus dans la zone des éléments de liaison (402) et recouvrent au moins partiellement ou complètement la largeur des parties latérales (203) dans le sens de la largeur (Q) transversalement à la direction longitudinale (L).

3. Dispositif selon la revendication 1 ou 2, **caractérisé en ce que** chaque élément d'amortissement (404) présente un évidement de matière (422) associé entre l'élément d'amortissement (404) et l'élément de liaison (402), l'évidement de matière (422) pénétrant au moins légèrement dans le logement de serrage (412), l'évidement de matière (422) présentant de préférence une section transversale en forme de trou oblong ou d'ovale allongé dans la direction longitudinale (L).

4. Dispositif selon l'une des revendications 1 à 3, **caractérisé en ce que** la première traverse amovible (204) comprend un corps principal (210) en forme de plaque allongée et forme dans chaque zone d'extrémité (208) respectivement un élément de liaison (402) formé d'une seule pièce avec le corps principal (210), qui présente une surface de section transversale réduite par rapport au corps principal (210), chaque logement de serrage (412) formant de préférence avec l'élément de liaison (402) un verrouillage transversal perpendiculaire à la direction longitudinale (L).

5. Dispositif selon l'une quelconque des revendications précédentes, **caractérisé en ce que** chaque élément d'amortissement (404) est réalisé sous la forme d'un ressort en arc comportant deux extrémités d'arc (424) reliées d'un seul tenant à la zone d'extrémité (208) respective de la traverse (204), le ressort en arc étant de préférence disposé de manière à s'étendre dans la direction longitudinale (L).

6. Dispositif selon la revendication 5, **caractérisé en ce que** les extrémités de l'arc (424) font saillie dans la direction longitudinale (L) au-delà de l'embouchure (413) du logement de serrage (412).

7. Dispositif selon l'une quelconque des revendications précédentes, **caractérisé en ce que** les éléments amortisseurs (404) comprennent une zone élastiquement déformable dont l'épaisseur de paroi est réduite par rapport à l'épaisseur de paroi moyenne de la traverse (204).

8. Dispositif selon l'une des revendications précédentes, **caractérisé en ce qu'**au moins les zones d'extrémité (208) de la traverse amovible (204) et les éléments d'amortissement (404) sont fabriqués dans le même matériau, notamment par moulage par injection.

9. Dispositif selon l'une quelconque des revendications précédentes, en particulier selon la revendication 8,
**caractérisé en ce que**
au moins les zones d'extrémité (208) des premières traverses amovibles (204) sont fabriquées dans une matière plastique plus souple, notamment à élasticité permanente, que les parties latérales (203).

10. Dispositif selon l'une quelconque des revendications précédentes, **caractérisé en ce que** chaque maillon de chaîne (200) comprend une première et une deuxième traverse amovible (204), les deux traverses (204) étant de construction identique ou la deuxième traverse amovible (204) ne présentant pas d'éléments d'amortissement (404) ou chaque maillon de chaîne (200) présentant une deuxième traverse fabriquée d'une seule pièce avec les parties latérales (203).

11. Dispositif selon l'une quelconque des revendications précédentes, **caractérisé en ce que** les premières traverses amovibles (204) sont prévues sur le côté (101) situé à l'extérieur dans la zone de déviation (6).

12. Chaîne porte-câbles selon l'une quelconque des revendications 1 ou 3 à 11 ci-dessus, **caractérisée en ce que** les maillons de la chaîne sont reliés entre eux de manière pivotante et que la liaison comporte des éléments d'articulation (8), les éléments d'articulation (8) étant élastiquement déformables et reliant chacun au moins deux parties latérales (3) qui se succèdent dans la direction longitudinale (L).

13. Traverse (204) pour un dispositif de guidage de ligne ou un maillon de chaîne (200) selon l'une quelconque des revendications précédentes, **caractérisée en ce que** la traverse (204) présente deux éléments d'amortissement (404) élastiques et **en ce que** chaque élément d'amortissement (404) est formé d'une seule pièce avec respectivement l'une des zones d'extrémité (208) de la traverse (204); chaque zone d'extrémité (208) comprenant un élément de liaison (402) destiné à être inséré par force dans un logement de serrage (412) qui est enfoncé dans un petit côté (216) d'une partie latérale (203) d'un maillon de chaîne (200) pour la liaison amovible avec la traverse (204), et les éléments d'amortissement (404) étant prévus dans la zone des éléments de liaison (402) pour recouvrir au moins partiellement ou complètement la largeur de la partie latérale dans le sens de la largeur (Q) transversalement à la direction longitudinale (L) .

14. Traverse (204) selon la revendication 13, **caractérisée par** les caractéristiques supplémentaires selon la partie caractérisante de l'une des revendications 1 à 11.
